# EUROPEAN PATENT APPLICATION

(11) **EP 0 884 294 A2**
(43) Date of publication of application: **16.12.1998**
(21) Application number: 98201824.4
(22) Date of filing: 03.06.1998
(51) Int. Cl.: C05F 17/02, C05F 9/04

(54) **Method for the accelerated biodegradation of an organic matter**

(30) Priority: 12.06.1997 FI 972483
(71) Applicant: Ideachip Oy, 15880 Hollola (FI)
(72) Inventor: Jonninen, Markku, 15840 Lahti (FI)
(74) Representative: LEITZINGER OY

(57) **Abstract**

The invention relates to a method for the accelerated biodegradation of an organic matter. The matter to be degraded is held in an elongated stack and through the stack is blown a gas which is recycled in a substantially closed gas circulation. The gas to be recycled is refrigerated and the refrigerated gas is blown through the stack at such a blow rate that the stack temperature increases from within towards the surface of the stack.

## Description

The present invention relates to a method for the accelerated biodegradation of an organic matter, in which method the matter to be degraded is held in an elongated stack and an oxygen-containing gas is blown through the stack from inside to the outer surface and the stab is periodically agitated by shifting the matter from one place to another.

The degradation process of an organic matter performed by bacteria consumes oxygen and produces primarily carbon dioxide and water. The energy output warms up the mass and the water contained therein. In order to sustain the oxygen content, it is necessary to aerate the mass. Energy discharges from the mass only through convection, emission, and along with exhaust gases and runoff waters. The traditional compost does not produce surplus energy since the process rate has settled to match the amount of exhaust energy. In a compost stack, the temperature rises very sharply when proceeding outwards from the air-blowing point. The maximal temperature of 55°C - 60°C is reached deep within the mass. When proceeding further towards the surface, the mass temperature decreases and the water vapour, to which a substantial amount of energy is bound, condensates into water in the proximity of the stack surface. Thus, traditionally, no use has been made of the expedited extraction of energy, wherein the mass temperature rises to a threshold value at which the bacteria begin to die as a result of their own action, not being able to endure high temperature. Hence, the bacterial population is limited to match the natural extraction of energy from the stack. This extraction of energy is diminutive as a result of a low surface temperature and the condensation of water vapour back into the mass.

In a prior art patent DE-4 345 238 the flow rate of aerating gas and the amount of cooling of the exhaust gas are so regulated that a predetermined amount of condensate water per time unit is removed from the exhaust gas. Since the inherent water content of the mass to be composted changes during the process of composting and varies from the very beginning of the process, the measuring of water contents does not offer any reliable way to control the optimum conditions of the enhanced process. This prior art patent does not disclose any thing about temperature gradient as to its amount and direction within the stack of the organic matter. It neither discloses the agitating phase which is necessary with an efficient aeration blow through the stack of organic matter.

The basic conception of the invention is the elimination of a temperature barrier between a mass to be processed and a gas bounding the same, whereby the water vapour bound by a gas to be blown through mass does not condensate on the boundary surface and does not deliver the energy bound thereby back into the mass. Especially, the present invention aims to provide a reliable method to obtain and control the optimally enhanced conditions of the biodegradation process in a large scale plant.

A process according to this basic conception and special aim is carried out by means of a method as set forth in claim 1. Thus, an extra-effective blowing of a gas at a regulable temperature can be used for extracting from a mass more energy than in traditional oomposting, whereby the rise of temperature does not preclude bacterial growth but, instead, a possibility is provided for the growth of bacterial population which is multiple relative to the conventional growth.

Since a larger bacterial population consumes more organic matter per unit time, the process of the invention proceeds faster and energy is also produced at a higher rate. An essential feature in the process of the invention is the recycling of a gas after scrubbing and cooling, thereby achieving a high-speed organic matter degradation process which produces energy and yields an end product in the form of a humus-like soil conditioner.

The invention will now be described in more detail with reference made to the accompanying drawings, in which
- fig. 1: is schematic view, showing an apparatus for implementing a method of the invention;
- figs. 2 and 3: depict in more detail a device used for the agitation of a stack, as seen from the side and in the lengthwise direction of the stack, respectively;
- fig. 4: is a diagrammatic cross-sectional view, showing a stack 2 placed in a thermally insulated space 1 and subjected to a gas blown therethrough;
- fig. 5: illustrates the temperature of a stack matter in terms of progressing from the middle of a stack towards the surface in the flowing direction of a gas to be blown through the stack; and
- fig. 6: illustrates the oxygen content of a gas to be blown through a stack and the modification thereof in terms of progressing from within the stack towards its surface.

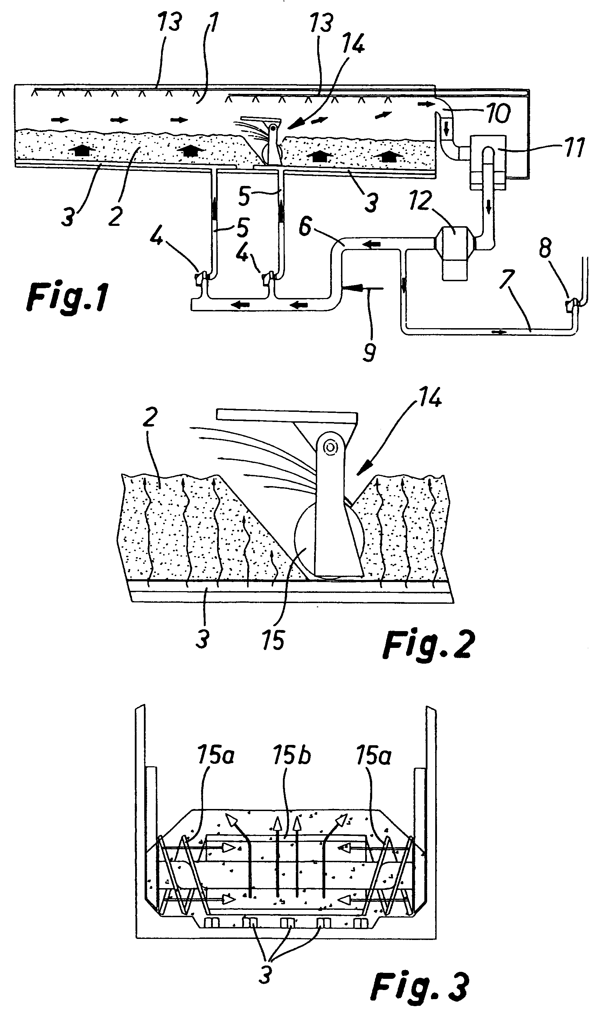

A space 1 shown in fig. 1 is a sizable thermally insulated hall building, which contains biodegradable matter in one or more long stacks 2. A typical cross-sectional shape for the stack 2 is visible in fig. 3. The stack may have a height of e.g. 2 m and a length of several tens or hundreds of meters. Naturally, the invention is also applicable to smaller-scale composting. The stack 2 has its bottom provided with aeration ducts 3 for blowing an oxygen-containing gas into the stack. The oxygen content must be at least 10 % for the bacterial activity not to suffer from oxygen deprivation.

Since the blown air urges to channel itself gradually through the mass with interspersed oxygen-deprived wet areas and dry areas, wherein the bacterial process slows down, the mass must be agitated from time to time. the agitation is effected by means of an agitator 14, shown more closely in figs. 2 and 3, which is run at the intervals of e.g. 5 - 10 hours through the stack from end to end. The agitator 14 is provided with a rotating impeller, capable of mixing the mass in such a manner that helices 15a included in the ends move stacked matter from the periphery towards the middle of a stack and tossing paddles 15b included in the middle are used for tossing such matter lengthwise of the stack from one stack zone to another, whereby, as it advances, the machine leaves behind a new mixed stack.

In a method of the invention, the recycling of an aeration gas is primarily effected as a closed circulation. Gas discharges from the space 1 by way of a conduit 10 to a scrubber 11 for stripping the gas of solid particles and excess ammonia. The composting process develops ammonia which is detrimental to the process. It is possible to include e.g. sulphuric acid in the scrubbing water of a gas to be recycled for maintaining the pH of a gas to be blown into the stack close to the pH value of 7. Moistening of the stack 2 can be arranged from a scrubber 11 by way of spray pipes 13. Since, in a method of the invention, the gas emerging from the space 1 has a temperature within the range of 50°C - 65°C, it cannot be returned to the process without cooling. A heat exchanger 12 is used for cooling the recycled gas to the temperature of 30°C - 45°C. The thermal energy received from the heat exchanger 12 can be used e.g. for heating purposes and the energy produced in major facilities equals the energy of a medium-sized power plant. The cooling step can be effected in connection with a solids scrubber. Downstream of the heat exchanger 12 a small portion of the circulation, typically about 10%, is discharged through a duct 7 by means of an exhauster 8. The exhaustion can be effected into the ambient air either directly or after filtering. In connection with or downstream of the heat exchanger 12 there may be a droplet separator for dehydrating the recycled air.

The refrigerated and dehydrated air is driven by means of fans 4 by way of the aeration ducts 3 through the compost stack 2.

Since the amount of exhaust air is typically only about 10 %, and no more than 30 %, it is possible to speak about a substantially closed gas circulation. The discharge flow produced by the exhauster 8 develops in the gas circulation system a vacuum and, as a result of this, substituting air is sucked into the system through the stack building's leakage points into the space 1. If necessary, it is also possible to arrange an adjustable intake duct 9.

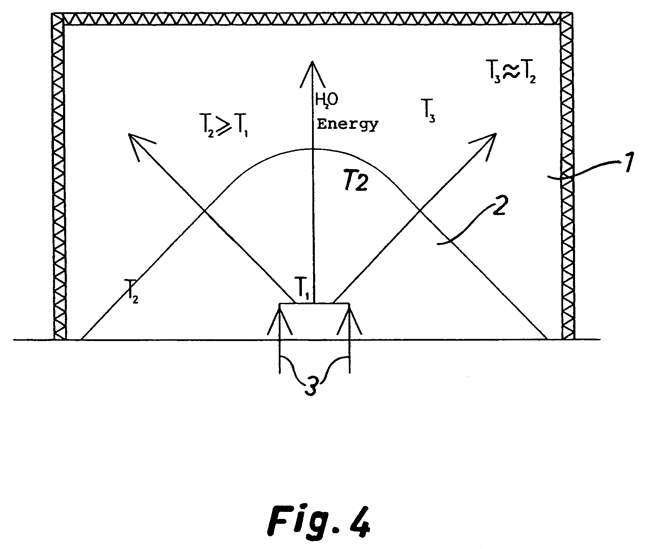

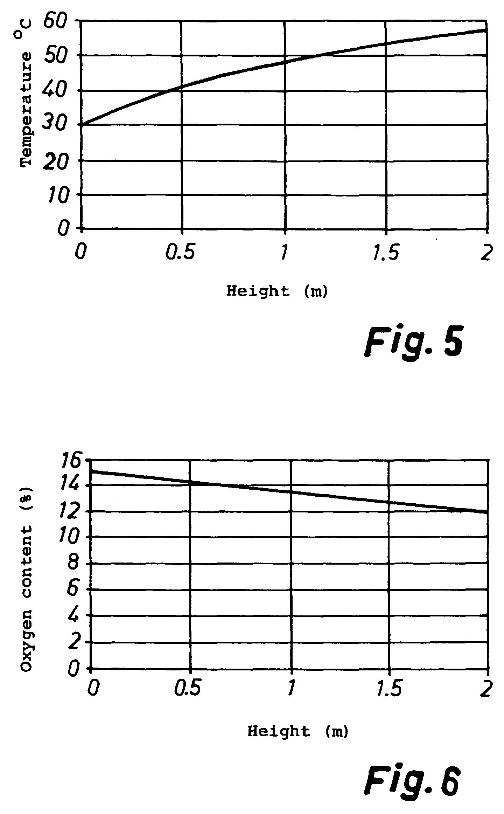

The following description relates to figs 4-6. The stack 2 shown in fig. 4 has a height of e.g. 2 m and the aeration gas 3 is brought in over the middle section of the stack floor. The gas is blown through the stack 2 at such a blow rate that the stack temperature rises continuously from within towards the surface of the stack. Fig. 5 illustrates a typical temperature curve wherein, at the gas inlet, the stack mass has a temperature of 30°C and in the stack surface layer the temperature is more than 55°C. Such temperature-related behavior is on the one hand based on a closed gas circulation and, on the other hand, on a higher-than-usual flow rate. As a result of such temperature-related behavior, the water vapour does not condensate on the surface of a compost stack but proceeds, together with the energy bound therein, to the heat exchanger 12.

The flow rate of a gas circulation and the amount of an exhaust gas can be used for controlling the oxygen content of the recycled air. This oxygen content is maintained within the range of 10 - 18 %, preferably within the range of 12 - 16 %. This is well sufficient for sustaining a required biodegradation process while the gas flow can be sufficient for obtaining the above temperature-related behavior. Furthermore, this serves to minimize the required amount of substituting air, since the fresh air introduced into the circulation results in a relatively higher oxygen increase. Thus, the process control is carried out by selecting correctly the absolute and relative rates for fans 4 and 8 as well as by adjusting the output of the heat exchanger in order to regulate the temperature of a gas to be blown. The fans 4 are used for selecting the amount of recycled air suitably for the temperature-related behavior illustrated in fig. 5. The exhauster 8 is used for selecting the amount of substituting air suitably so as to maintain a correct range for the oxygen content of a gas participating in the process.

According to one important feature of the invention, the exhaust vent 8 is located after the scrubber 11 in the flow direction of the circulating gas, whereby the circulating gas in the scrubber 11 has a pressure below the atmospheric pressure. This enhances the efficiency of the scrubber. The pressure in the circulating system is below the atmospheric pressure in all other parts of the system except for the pressure ducts 5.

A method of the invention can be applied for the biodegradation of both slurries and solid materials. The degradation process advances at a rate of speed which is multiple relative to the conventional composting processes. This, in turn, results in faster recycling of the degradable matter and in the increased capacity of a facility or a smaller size thereof with respect to the capacity. In addition, the amount of thermal energy recovered from the process is so considerable that its exploitation is economically viable.

## Claims

1. A method for the accelerated biodegradation of an organic matter, in which method the matter to be degraded is held in an elongated stack (2) and an oxygen-containing gas is blown through the stack (2) from inside to the outer surface and the stack is periodically agitated by shifting the matter from one place to another, **characterized** in that the gas to be blown through the stack (2) is recycled as a substantially closed gas circulation, that the gas to be recycled is refrigerated and the refrigerated gas is blown through the stack at such a blow rate that the temperature of a stacked matter increases from within towards the surface of the stack.

2. A method as set forth in claim 1, **characterized** in that no more than 30 %, preferably about 10 %, of the flow is exhausted from the substantially closed gas circulation and that a vacuum created in the gas circulation system as a result of this exhaustion is used for sucking substituting air into the circulation system.

3. A method as set forth in claim 2, **characterized** in that substituting air is sucked through leakages in the stack building and possibly through an adjustable intake duct (9).

4. A method as set forth in any of claims 1-3, **characterized** in that the gas to be recycled is refrigerated in a heat exchanger (12) from a temperature range of about 50°C - 65°C to a temperature range of about 30°C - 45°C.

5. A method as set forth in any of claims 1-4, **characterized** in that the temperature and flow rate of a gas to be recycled are adjusted such that the temperature of the stacked matter within the stack is close to the recycled gas blow-in range of about 30°C - 45°C and in the proximity of the stack surface it is about 55°C - 65°C.

6. A method as set forth in any of claims 1-5, **characterized** in that the gas to be recycled is scrubbed with an acid solution for reducing the ammonia content of a gas to be blown into the stack or for stripping the gas of ammonia and for thus maintaining pH of the gas in the proximity of the pH value 7.

7. A method as set forth in any of claims 1-6, **characterized** in that the gas to be recycled is scrubbed prior to cooling and dehydrated after cooling.

8. A method as set forth in any of claims 1-7, **characterized** in that the flow rate of gas circulation and the amount of exhaust gas can be adjusted for maintaining the oxygen content of the recycled gas within the range of 10 - 18 %, preferably within the range of 12 - 16 %.

9. A method as set forth in any of claims 1-8, **characterized** in that the stack is agitated by running an agitator (14) lengthwise of the stack (2) and that the agitator is used for moving stacked matter from the sidelines to the middle of the stack and for tossing it lengthwise of the stack from one zone to another whereby, as it advances, the machine (14) leaves behind a new mixed stack (2).

10. A method as set forth in claim 6 or 7, **characterized** in that the exhaust vent (8) is located after the scrubber (11) in the flow direction of the circulating gas, whereby the circulating gas in the scrubber (11) has a pressure below the atmospheric pressure.
